# EUROPEAN PATENT APPLICATION

(11) **EP 2 995 358 A1**
(43) Date of publication of application: **16.03.2016**
(21) Application number: 14794087.8
(22) Date of filing: 09.05.2014
(51) Int. Cl.: B01D 35/30, F02M 37/22

(54) **FILTER ELEMENT BASE AND LID FOR FUEL FILTER**

(30) Priority: 10.05.2013 BR 102013011661
(71) Applicant: Mahle Metal Leve S/A, 13210-877 Jundiaí, SP (BR); Mahle International GmbH, 70376 Stuttgart (DE)
(72) Inventor: DE AGUIAR, Bruno, 13848-054Mogi-Guaçu/SP (BR); MOREIRA, Fábio, 13280-000 Vinhedo/SP (BR); JUN YOSHINO, Fernando, 13214-730 Jundiaí/SP (BR); FRITZ, Luiz Carlos, 13339-070 Indaiatuba/SP (BR); RASCIO, Raphael, 13219-201 Jundiaí/SP (BR)
(74) Representative: BRP Renaud & Partner mbB Rechtsanwälte Patentanwälte Steuerberater
(86) International application number: PCT/BR2014/000149
(87) International publication number: WO 2014/179852

(57) **Abstract**

The invention relates to a filter lid that allows the filter element (20) contained inside the filter to be aligned both radially and axially. In one embodiment, the filter (10) comprises at least one body (30) and at least one filter element (20) to be arranged inside the body (30), which is closed by a lid (40) that comprises a side wall (41) with a continuous perimeter and designed to be attached to the body (30) of the filter (10), and an opening (42) formed in one of the ends of the side wall (41) and designed for receiving the filter element.

## Description

### Field of the invention

The invention described here relates to a filter, and more particularly, the invention concerns a filter comprising a lid which permits both radial and axial alignment of a filter element inside said filter. The invention also concerns a base of a filter element, and a filter which comprises the lid and a filter element associated with a base.

### Antecedents of the invention

The fuel supply system of a motor vehicle which uses an internal combustion engine has the function of permitting conduction under pressure of fuel from a tank or reservoir to the combustion chamber.

Normally, a system of this type comprises a supply pump, a fuel filter, a distributor pipe, a pressure regulator and injection valves. In operation, the supply pump pressurizes the system, which allows the fuel to be conveyed from the tank to the distributor pipe, passing via the fuel line. The pressure regulator valve controls the pressure in said line. On this course, the fuel also passes via a filter positioned at any point between the fuel pump and the injection valves.

As is already known in the prior art, the filters consist of means which can permit the flow of a necessary substance, such as the combustible fluid, and at the same time obstruct the passage of other undesirable substances such as, for example, solid particles or other fluids.

In particular, a fuel filter serves the purpose of retaining impurities contained in the fuel by means of a filtering element, such as a paper, enveloped by a body normally constituted by nylon, steel, aluminum or plastic.

In other words, the fuel filters protect the fuel supply system, eliminating or at least reducing the impurities present in the fuel which are derived from the transport, storage, and/or from the tank itself, therefore preventing the obstruction of orifices of the injector valves. Thus, the filters provide better performance of the engine, and consequently an increase in its service life.

Ideally, the filter should provide high efficiency in the retention of contaminants, and at the same time low resistance to the flow of fuel. In addition, the filter must be designed such as to guarantee good sealing and high resistance to internal pressures.

At present, because of the alteration of the fuel system to an electronic injection system, the filter has become an essential part, since the undesirable particles which exist in the fuel can cause excessive wear of the components of the injection system, as well as being able to obstruct the injector nozzles of the electronic injection system.

Consequently, the lack of a fuel filter would undoubtedly cause problems in starting of the engine, and would detract significantly from adequate operation of it, causing an increase in the consumption of fuel and wear of the components, and also possible malfunctions.

The service life of a filter depends on the quantity of impurities contained in the fuel, and varies according to the mileage indicated for each model/type of vehicle. In all cases, the filter must be changed periodically in preventative maintenance operations.

In these maintenance operations, the filter is normally discarded completely when it reaches the end of its planned service life, since it is not possible to separate the filter element from the body in order to replace it, as the filter consists of a single part comprising a permanently closed body, with the filter element already fitted in its interior. It will be appreciated that this process is not the most appropriate one, both from the economic and environmental/ecological point of view, since the material of the body is not usually biodegradable. Furthermore, since the fuel filter is made of different materials, i.e. the material of the body and the material of the filter element, and since it is in a single piece, it is difficult or even impossible to separate these materials for a suitable environmentally friendly disposal destination.

For the purpose of solving this problem, the applicant disclosed in publication WO 2012/083405 a fuel filter, the filter element of which can be separated from the body. This filter is provided with a lid which can be detached from the body, thus allowing the filtering element to be replaced without needing to discard the body, and also without needing to disconnect the filter from the fuel line. By this means, the filter element alone can be discarded, and there is no need to replace the body. In addition to the lower cost associated with the replacement of the filter, this solution also permits suitable disposal of the filter element, consequently having a lower impact on the environment.

Although the solution proposed is suitable for the purposes of replacement and disposal of the filter, it has been found that when the filter element is replaced and the new filter element is inserted, it may happen that the filter is not correctly positioned inside the body, which can lead to leakages, prevent adequate flow of the combustible fluid, or even block the fuel line.

This is because the fuel filters are generally installed in locations which are difficult to access, such as in the engine compartment or in the lower part of the vehicle chassis, therefore making it difficult to check visually that the filter element has been fitted correctly. In addition, often, since this maintenance is simple to carry out and does not require special tools, it is performed by the owner of the vehicle, who generally does not have adequate experience and training for correct fitting of the filter element.

Consequently, an objective of the present invention is to eliminate the problems encountered in the prior art in relation to the fitting of a filter element in a body of a filter, in particular a fuel filter.

### DESCRIPTION OF THE INVENTION

In order to eliminate the above-described deficiencies encountered in the prior art, the invention relates, inter alia, and according to a first aspect, to a filter which comprises at least one body and at least one filter element, which filter element is designed to be positioned inside the body which is closed by a lid, and the lid comprises:
- a lateral wall which is provided with a continuous perimeter, and is designed to be secured on the body of the filter;
- an opening which is formed in one of the ends of the lateral wall, and is designed to receive said filter element; and
- at the opposite end, a closed wall which incorporates an input or output for the filtered fluid; the lid additionally comprising:
- at least one means for radial alignment of said filter element; and
- at least one means for axial alignment of said filter element.

According to additional and/or alternative embodiments of this first aspect of the invention, the following characteristics, alone or in technically possible combinations, can also be present:
- said lid comprises two means for radial alignment of said filter element;
- said lid comprises more than two means for radial alignment of said filter element;
- said means for radial alignment of the filter element are provided on said lateral wall of the lid;
- said means for radial alignment of the filter element comprise a channel formed in the lateral wall of said lid;
- said lid comprises two means for axial alignment of the filter element;
- said lid comprises more than two means for axial alignment of the filter element;
- said means for axial alignment of the filter element are provided in the inner part of said closed wall; and
- said means for axial alignment of the filter element are a recess formed in the inner part of said closed wall.

In a second aspect, the invention relates to a base for a filter element, which comprises firstly a wall for support and/or securing of a filter element, and secondly a wall for support on a closure lid of a filter formed by a body and a lid, and which contains said filter element, said base comprising:
- at least one means for radial alignment of said filter element; and
- at least one means for axial alignment of said filter element.

According to additional and/or alternative embodiments of this second aspect of the invention, the following characteristics, alone or in technically possible combinations, can also be present:
- said base comprises two means for radial alignment of said filter element;
- said base comprises more than two means for radial alignment of said filter element;
- said means for radial alignment of the filter element are provided in said lateral wall of the base;
- said means for radial alignment of the filter element comprise a rim formed in the lateral wall of said base;
- said base comprises two means for axial alignment of the filter element;
- said rim comprises more than two means for axial alignment of the filter element;
- said means for axial alignment of the filter element are provided in the wall opposite the support wall of the filter element; and
- said means for axial alignment of the filter element are a pin formed in the wall opposite the wall for support of the filter element.

In a third aspect, the invention relates to a filter which comprises a body, a filter element, a lid, and a base for the filter element, the lid and the base being produced as previously defined, and cooperating with one another in order to align the filter element both radially and axially.

### BRIEF DESCRIPTION OF THE DRAWINGS

The invention will now be described in relation with its particular embodiments, with reference to the appended figures. These figures are schematic, and their dimensions and/or proportions may not correspond to the reality, since they are designed simply to describe the embodiments of the invention didactically, and wherein:
Figure 1 is a lateral view in transverse cross section of a filter according to an embodiment of the invention;
Figure 2 is a perspective view in partial transverse cross section of figure 1;
Figure 3 is a perspective view of the filter element associated with the base;
Figure 4 is a perspective view of the base of the filter element; and
Figure 5 is a front view of the lid of the filter.

### DESCRIPTION OF EMBODIMENTS OF THE INVENTION

The invention is now described in relation to its particular embodiments, with reference to the appended figures. In the figures and in the following description, similar parts are indicated throughout the description and in the figures by the same reference numbers. The figures are not necessarily to scale. Certain characteristics may be shown with an exaggerated scale, or in a particular form, or somewhat schematically, and some details of conventional elements may not be represented, for the sake of greater clarity and concision of this description. The invention can have embodiments with different forms. Specific embodiments are described in detail and shown in the figures on the understanding that these must be considered examples of the principles involved, and that they are not designed to limit the invention which is simply illustrated and described in the present description. It must be acknowledged that the various teachings of the embodiments discussed hereinafter can be used separately or in any suitable combination in order to produce the same technical effects.

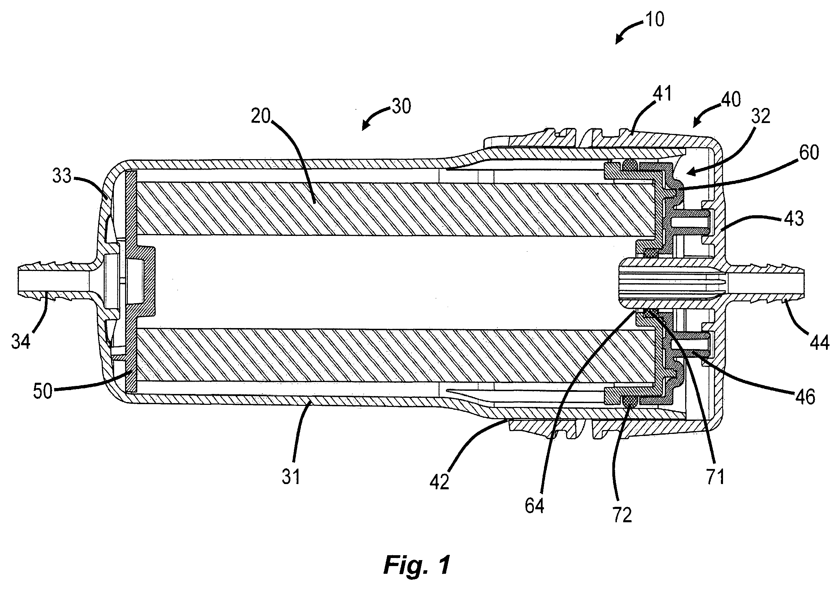

Figure 1 shows a lateral view in transverse cross section of a filter 10 which can be dismantled, i.e. a filter, the filter element 20 of which can be detached from the filter. The filter 10 is generally formed by a body 30 which envelops the filter element 20, and generally has a substantially cylindrical form. It will be appreciated that the body can have any other technically suitable form. The body 30 consists of a lateral wall 31 which extends axially, and at its ends it defines on one side an opening 32 which is designed to receive a filter element 20, and on the other side a closed wall 33 which incorporates an input 34 (or output) for the fluid which is filtered. In particular, the filter 10 described here is a filter which is designed to filter a combustible fluid, such as, without being limited to this, gasoline, ethanol, diesel oil, etc. For this purpose, the input 34 (or output) is connected to the fuel supply line (not represented).

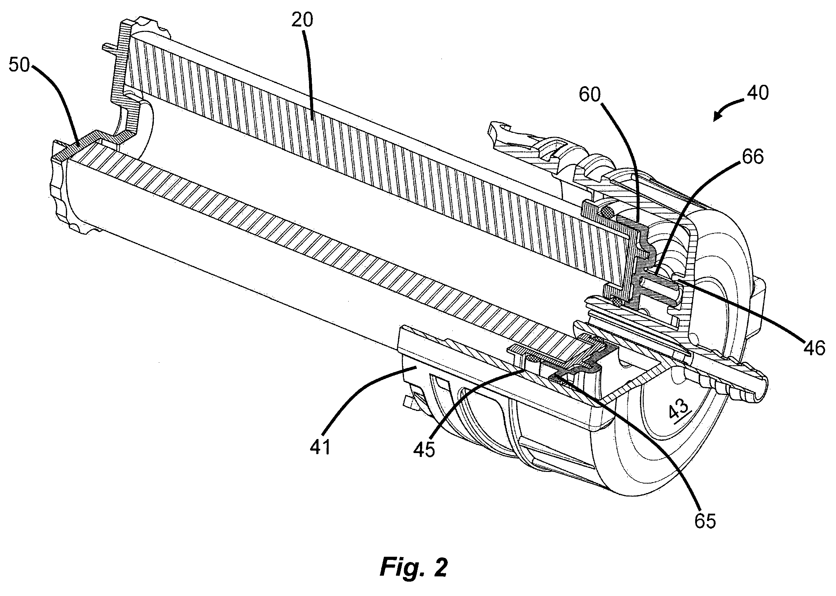

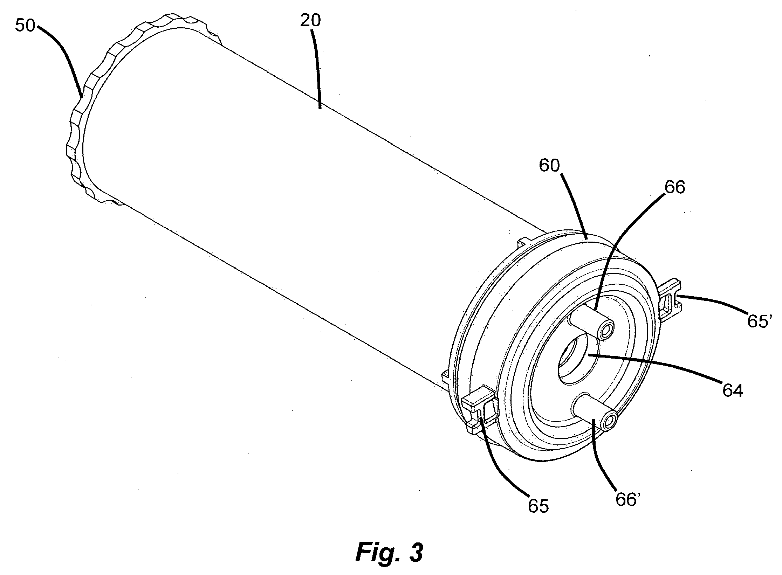

Also in relation to figure 1, and as also represented in figures 2 and 3, there is illustration of the filter element 20, which is enveloped by the body 30, and can be dissociated from it, as will be explained in greater detail hereinafter. Since the embodiment represented here discloses a body with a substantially cylindrical form, the filter element 20 can have a corresponding form which is also cylindrical.

Typically, the filter element 20 is made of a material which is suitable for retaining undesirable elements which must be retained, and its interior is generally hollow, such as to permit a suitable flow of fluid which is designed to be filtered. As illustrated in this embodiment, the filter element 20 comprises firstly a flange 50 which is designed to be supported on the closed wall 33 of the body 30, and secondly a base 60, which is designed to form a support against the lid 40 which is secured on the body 30. The provision of a flange 50 and a base 60 for the filter element 20 at its ends is important in order to form a seal for the hollow inner portion of the filter element 20 relative to the outer portion, such as to permit correct guidance of the flow of fluid for suitable filtering. In addition, since the material of the filter element 20 is generally a material with low mechanical strength, such as a paper or fabric, both the flange 50 and the base 60 act as a means for mechanical reinforcement, so that the filter element 20 does not collapse when it is supported firstly on the closed wall 33 of the body 30, and secondly on the lid 40.

Figure 1 also shows the lid 40 of the filter 10, comprising a lateral wall 41 which defines a continuous perimeter, and delimits firstly an opening 42 which is also designed to receive the filter element 20, and to be secured on the body 30, and secondly a closed wall 43 which is integral with the lateral wall 41, and incorporates an output 44 (or input) for the fluid being filtered. In this specific embodiment, the output 44 is connected to a fuel supply line (not represented).

Figures 1 and 2 represent the fitted filter 10, i.e. comprising the body 30 associated with the lid 40 and containing in its interior the filter element 20 which is supported firstly on the body by means of the flange 50, and secondly on the lid by means of a base 60.

In operation, in the case of a filter for a combustible fluid, the fluid enters firstly through the input 34 defined in the body 30 and envelops the interior of it in the space delimited between the flange 50 and the closed wall 33 of the body 30, and through the space delimited by the lateral wall 31 of the body 30 and the outer portion of the filter 10. Because of the pressure which exists in a fuel supply line, which is generally constituted by a system pressurized by a pump, the fluid is forced into the interior of the filter element 20, and passes through its hollow inner portion, in the direction of the output 44 provided in the lid 40.

The elements described here, and the functioning of the filter, are known and described in greater detail in publication WO 2012/083405, which is incorporated here for reference.

However, it has been found that the fitting of the filter element 20 in the interior of the body 30 and in relation to the lid during replacement of the filter element 20, for example, may not be adequate, and both the flange 50 and the base 60 could be misaligned relative to the closed wall 33 of the body 30 and the lid 40, respectively, or, also, the flange or the base 60 may not be adequately in contact with the closed walls 33, 43 of the body 30 and the lid 40. The misalignment of the filter element 20, or inadequate contact of the flange 50 and the base 60 could lead to leakages, which are particularly dangerous in the case of a fuel filter. Furthermore, spaces may also be created in the interior of the filter, thus permitting the passage of fluid directly to the output 44, i.e. without passing via the filter element 20, and there may also be an increased load and generation of faults in the fuel supply.

Consequently, the need has been determined for adequate alignment both axially and radially of the filter element 20 in relation to the body 30 and in relation to the closure lid, so as to avoid these disadvantages.

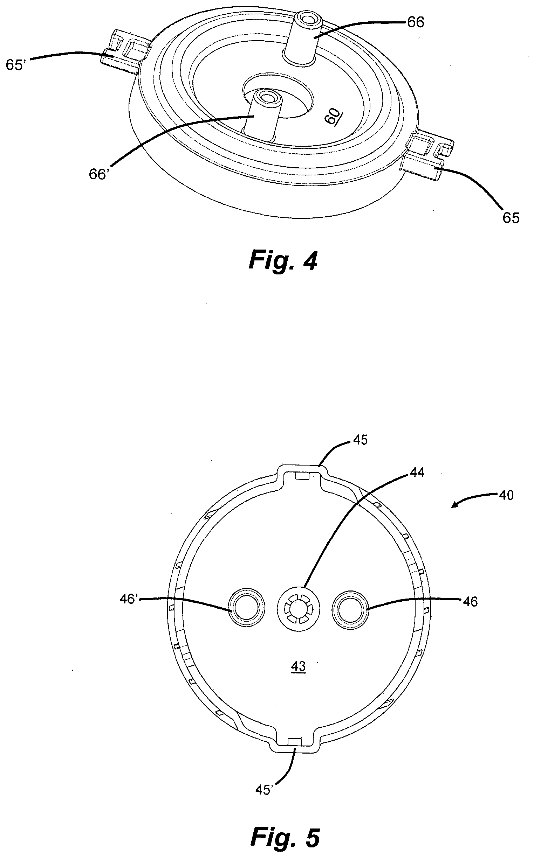

With reference now to figures 2 to 5, a filter 10 with a lid is illustrated according to a first aspect of the present invention.

The lid 40 as already described, and in accordance with this particular embodiment, has a substantially cylindrical form, on the understanding that it can be produced in any other forms which are suitable and technically possible, and it comprises a lateral wall 41 formed by a continuous perimeter. According to the present description, the term "continuous perimeter" must be interpreted as being a wall which comprises at least one portion without interruptions, although openings or non-continuous parts are provided along the lateral wall 41. The lateral wall 41 can also comprise other elements and technical characteristics, such as elements for reinforcement, relief of tension, and means for closure and securing on the body 30, etc. These additional elements can be common to lids in general, and are not relevant to the present invention, such that a particular description will not be provided in relation to these additional elements.

According to the invention, the lid 40 must comprise at least one means for radial alignment of said filter element 20. According to the embodiment described here, the means for radial alignment of the filter element 20 is a channel 45 formed in the lateral wall 41 of the lid. Thus, and as will be described in greater detail hereinafter, the channel 45 can receive a rim 65 provided in the base 60 of the filter element 20, which in turn is fitted and can slide axially along the channel 45 formed in the lid. As can be appreciated by persons skilled in the art, taking into consideration that the operation of fitting and dismantling of the filter element 20 involves axial displacement of the lid in relation to the associated body, for example, rotation of the lid so as to keep the filter element 20 aligned radially in relation to the lid, and consequently in relation to the body 30, the channel 45 acts as a means for radial alignment of the filter element 20, which can cooperate with the base 60 of the filter element 20, such that both are aligned when the lid is rotated, thus preventing misalignments from occurring during insertion of the filter element 20 and the lid in the body, and securing of the lid on the body.

According to an additional embodiment of the present invention, two means are provided for radial alignment of the filter element 20. According to the embodiment illustrated, these two means are two channels 45, 45' provided in positions opposite one another, i.e. arranged at 180° to one another in the lateral wall 41 of the lid. It will be appreciated that more than two means for radial alignment of the filter element 20 can be provided and that these means can be positioned in any appropriate manner in any portion of the lid.

Although in the above-described embodiment it has been considered that the means for radial alignment of the filter element 20 is a channel 45, it is understood that other equally suitable means can also be provided, such as, without however being limited to these, fitting means such as pins, toothed portions, fitting locks; means which use friction, such as elastomer materials, or also chemical means, such as glue, etc.

In addition, also according to this first aspect of the invention, the lid must also comprise a means for axial alignment of the filter element 20. According to the embodiment illustrated here, the means for axial alignment of the filter element 20 consist of at least one, and in particular two, recesses 46, 46' formed in the inner portion of the closed wall 43 of the lid. According to this embodiment, these recesses are cylindrical, and project from the plane of the inner part of the closed wall 43 of the lid, forming cavities which are designed to fit and cooperate, for example, with pins 66, 66' provided in the base 60 of the filter element 20. By this means, when the filter element 20 is fitted, the axial movement of the lid in the direction of the interior of the body 30 will also permit axial alignment of the filter element 20, which will follow the same axial movement as the lid relative to the body during the closure, and thus prevent any axial misalignment of the filter element 20 in relation to the body 30 or the lid, therefore guaranteeing efficient and secure fitting, even where it is not possible to control the position of the filter element 20 in the interior of the filter 10. It will be appreciated that more than two means for axial alignment of the filter element 20 can be provided, and their positioning can be at any point of the lid.

Although, in the embodiment described here of this second aspect of the invention, it has been considered that the means for axial alignment of the filter element 20 are at least one recess 46 formed in the inner part of the closed wall 43 of the lid, it is understood that other equally suitable means can also be provided, such as, without however being limited to these, fitting means such as pins, toothed portions, fitting locks; means which use friction, such as elastomer materials, or also chemical means, such as glue, etc.

The invention also relates to a base 60 for a filter element 20. According to this second aspect of the invention, the base 60 of a filter element 20 comprises at least one means for radial alignment of said filter element. An example of a base 60 for a filter element 20, as previously described, is known from publication WO 2012/083405. In general, a base 60 for a filter element is used firstly to support and optionally also to secure the filter element 20, and secondly it is supported on the closure lid of the filter 10. For this purpose, the base 60 should preferably have a form, taken along its transverse cross section, which is substantially the same as the transverse form of the filter element 20, the body 30 and the lid of the filter 10. According to the embodiment illustrated here, this form is cylindrical, although it is understood that other forms can also be considered. On one side of the base 60, there is provided the support for, and optionally the fitting and securing of the filter element 20, and the other side is designed to be supported against the lid of the filter 10. According to the embodiment described here, said means for radial alignment of the filter element 20 is a rim 65 formed laterally in the base 60 of the filter element 20. By this means, the rim 65 can be fitted and can slide axially along the channel 45 formed in the lid, as a means for radial alignment of the filter element 20. As will be appreciated by persons skilled in the art, taking into account that the operation of fitting and dismantling of the filter element 20 involves the axial displacement of the lid, such as by rotation, so as to keep the filter element aligned radially relative to the lid, and consequently relative to the body 30 of the filter 10, the channel 45 which acts as a means for radial alignment of the filter element 20 provided in the lid, in cooperation with the rim 65 of the base 60 of said filter element, means that both are aligned along a radial direction, which prevents misalignments from occurring during the insertion of the filter element 20 and the lid in the body 30, and subsequent securing of the lid on the body.

According to an additional embodiment of this second aspect of the invention, two means are provided for radial alignment of the filter element 20 in the base 60. As illustrated, these two means are two rims 65, 65' formed in positions opposite one another, i.e. positioned at 180° to one another on the side of the base 60, such as to conform with the means for radial alignment provided on the lid. It will be appreciated that more than two means for radial alignment of the filter element 20 can be provided, and these can be positioned in any appropriate form on any portion of the base 60.

Although in the embodiment described here it has been considered that the means for radial alignment of the filter element 20 provided in the base 60 is a rim 65 which can cooperate with a channel 45 provided in the lid, it is understood that other equally suitable means can also be provided which can also co-operate with means provided on the lid, such as, without however being limited to these, fitting means such as pins, toothed portions, fitting locks; means which use friction, such as elastomer materials; or also chemical means, such as glue, etc.

Also according to this second aspect of the invention, the base 60 must also comprise a means for axial alignment of the filter element 20. According to the embodiment illustrated here, the means for axial alignment of the filter element 20 provided in the base 60 consists of at least one, and in particular two, pins 66, 66' formed in the wall opposite the wall on which the filter element 20 is supported. According to this embodiment, these pins 66, 66' are cylindrical and project from the plane of the base 60, forming projections which are designed to fit, for example, in the interior of the recesses 46, 46' provided in the inner side of the lid of the filter 10. By this means, when the filter element 20 is fitted, the axial movement of the lid in the direction of the body 30, in co-operation with the pins 66, 66' formed on the base 60, will also permit axial alignment of the filter element 20, which will follow the same axial movement as the lid relative to the body, and thus prevent any axial misalignment of the filter element 20 in relation to the body 30 or the lid 40, therefore guaranteeing efficient and secure fitting, even where it is not possible to control the position of the filter element 20 in the interior of the filter 10. It will be appreciated that more than two means for axial alignment of the filter element 20 can be provided, and their positioning can be at any point of the base 60.

In addition, although according to this embodiment the means for axial alignment of the filter element 20 provided in the base 60 are one or more pins, persons skilled in the art will be able to conceive of other means which can also be used, such as dowels, screws, etc. For example, the base 60 can comprise recesses 46, 46' formed in the wall opposite the wall where the filter element 20 is supported, since the lid can comprise the pins 66, 66', such that the two means for axial alignment can also co-operate with one another.

In addition, the means for axial alignment of the filter element can be dissociated from the base or the lid, and can be constituted for example by a separate body, such as a wedge, which is supported firstly on the base, and secondly on the closed wall of the lid.

The base 60 of the filter element 20 can also comprise sealing means, in order to assist the correct flow of the fluid to be filtered. As can be seen in particular in figures 1 and 2, these sealing means can consist for example of one or more elastomer rings (O-rings) arranged suitably for the sealing of the filter 10. The fluid output 44 of this embodiment is designed firstly such that the outer portion of the lid and secondly the inner portion of the lid are designed to be fitted in an opening 64 provided in the base 60 of the filter element 20. By this means, the opening 64 in the base 60 and the output 44 provided in the lid 40 must be substantially aligned. For this purpose, the base 60 of the filter element 20 can comprise an inner sealing ring 71 in order to seal the annular space which exists between the output 44 and the opening 64 in the base 60. In addition, an outer sealing ring 72 can be provided in the base 60 in order to seal the annular space which exists between said base 60 and the body 30 of the filter 10.

According to a third aspect, the invention relates to a filter 10 which comprises a body 30, a lid 40, and a filter element 20 associated with a base 60, wherein said lid comprises at least one means for radial alignment of the filter element 20, designed to cooperate with at least one means for radial alignment of the filter element 20 provided in said base 60. In addition, said lid can also comprise at least one means for axial alignment of the filter element 20 which is designed to cooperate with at least one means for radial alignment of the filter element 20 provided in said base 60. An appropriate embodiment of a lid according to this third aspect of the invention is for example the lid which has been described here by way of example. An appropriate embodiment of a base 60 according to this third aspect of the invention is for example the base 60 of the filter element 20 which has been described here by way of example.

Although the invention has been described in relation to particular embodiments, persons skilled in the art will be able to make alterations to the form and structures, or also combine the elements described here in a form which has not been described, without however departing from the principles taught here. Consequently, the appended claims must be interpreted as covering all and any equivalents which come within the scope of the invention.

### List of parts:

10 - Filter
20 - Filter element
30 - Body
31 - Lateral wall of the body
32 - Opening in the body
33 - Closed wall of the body
34 - Input (or output) for fluid provided in the body
40 - Lid
41 - Lateral wall of the lid
42 - Opening in the lid
43 - Closed wall of the lid
44 - Output (or input) for fluid provided in the lid
45, 45' - Means for radial alignment
46, 46' - Means for axial alignment
50 - Flange
60 - Base of the filter element
64 - Opening in the base
65, 65' - Means for radial alignment
66, 66' - Means for axial alignment
71 - Inner sealing ring
72 - Outer sealing ring

## Claims

1. A filter (10) which comprises at least one body (30) and at least one filter element (20), which filter element is designed to be positioned inside the body which is closed by a lid (40), and the lid comprises:
- a lateral wall (41) which is provided with a continuous perimeter, and is designed to be secured on the body (30) of the filter (10); and
- an opening (42) which is formed in one of the ends of the lateral wall (41), and is designed to receive said filter element, and at the opposite end, a closed wall (43) which incorporates an input or output (44) for the filtered fluid; **characterized in that** it additionally comprises:
- at least one means for radial alignment of said filter element (20); and
- at least one means for axial alignment of said filter element (20).

2. The filter as claimed in claim 1, **characterized in that** the lid (40) comprises two means for radial alignment of said filter element (20).

3. The filter as claimed in claim 1, **characterized in that** the lid (40) comprises more than two means for radial alignment of said filter element (20).

4. The filter as claimed in claim 1, **characterized in that** said means for radial alignment of the filter element (20) are provided on said lateral wall (41) of the lid.

5. The filter as claimed in claim 1, **characterized in that** said means for radial alignment of the filter element (20) comprise a channel (45) formed in the lateral wall (41) of said lid.

6. The filter as claimed in claim 1, **characterized in that** the lid (40) comprises two means for axial alignment of the filter element (20).

7. The filter as claimed in claim 1, **characterized in that** the lid (40) comprises more than two means for axial alignment of the filter element (20).

8. The filter as claimed in claim 1, **characterized in that** said means for axial alignment of the filter element (20) are provided in the inner part of said closed wall (43) of the lid.

9. The filter as claimed in claim 1, **characterized in that** said means for axial alignment of the filter element (20) are a recess (46) formed in the inner part of said closed wall (43) of the lid.

10. A base (60) for a filter element, which comprises firstly a wall for support and/or securing of a filter element (20), and secondly a wall for support on a closure lid of a filter (10) formed by a body (30) and a lid (40), and which contains said filter element, **characterized in that** said base (60) comprises:
- at least one means for radial alignment of said filter element (20); and
- at least one means for axial alignment of said filter element (20).

11. The base as claimed in claim 10, **characterized in that** it comprises two means for radial alignment of said filter element (20).

12. The base as claimed in claim 10, **characterized in that** it comprises more than two means for radial alignment of said filter element (20).

13. The base as claimed in claim 10, **characterized in that** said means for radial alignment of the filter element (20) are provided in said lateral wall of the base.

14. The base as claimed in claim 10, **characterized in that** said means for radial alignment of the filter element (20) comprise a rim (65) formed in the lateral wall of said base.

15. The base as claimed in claim 10, **characterized in that** it comprises two means for axial alignment of the filter element (20).

16. The base as claimed in claim 10, **characterized in that** it comprises more than two means for axial alignment of the filter element (20).

17. The base as claimed in claim 10, **characterized in that** the means for axial alignment of the filter element (20) are provided in the wall opposite the support wall of the filter element.

18. The base as claimed in claim 10, **characterized in that** said means for axial alignment of the filter element (20) are a pin (66) formed in the wall opposite the wall for support of the filter element.

19. A filter (10) which comprises a body (30), a filter element (20), a lid (40), and a base (60) for the filter element, **characterized in that** said lid is as defined in any one of claims 1 to 9, and said base (60) is as defined in any one of claims 10 to 18.
